# EUROPÄISCHE PATENTSCHRIFT

(11) **EP 1 040 662 B1**
(45) Veröffentlichungstag und Bekanntmachung des Hinweises auf die Patenterteilung: **11.06.2003**
(21) Anmeldenummer: 97953855.0
(22) Anmeldetag: 18.12.1997
(51) Int. Cl.: H04N 7/167, H04L 9/08

(54) **VERFAHREN ZUM SICHERN EINES DURCH EINE SCHLÜSSELHIERARCHIE GESCHÜTZTEN SYSTEMS**
METHOD FOR SECURING A SYSTEM PROTECTED BY KEY HIERARCHY
PROCEDE POUR SECURISER UN SYSTEME PROTEGE PAR UNE HIERARCHIE CRYPTOGRAPHIQUE

(43) Veröffentlichungstag der Anmeldung: 04.10.2000
(73) Patentinhaber: Deutsche Telekom AG, 53113 Bonn (DE)
(72) Erfinder: SCHWENK, Jörg, D-91239 Henfenfeld (DE)
(86) Internationale Anmeldenummer: EP9707124
(87) Internationale Veröffentlichungsnummer: WO99033270

(56) Entgegenhaltungen:
- EP-A- 0 506 435
- DE-A- 3 124 150
- DE-A- 19 511 298
- US-A- 4 771 459
- LEIN HARN ET AL: "A CRYPTOGRAPHIC KEY GENERATION SCHEME FOR MULTILEVEL DATA SECURITY" 1. Oktober 1990 , COMPUTERS & SECURITY INTERNATIONAL JOURNAL DEVOTED TO THE STUDY OF TECHNICAL AND FINANCIAL ASPECTS OF COMPUTER SECURITY, VOL. 9, NR. 6, PAGE(S) 539 - 546 XP000162681 siehe das ganze Dokument
- SANTOSH CHOKHANI: "TOWARD A NATINAL PUBLIC KEY INFRASTRUCTURE" IEEE COMMUNICATIONS MAGAZINE, Bd. 32, Nr. 9, 1. September 1994, Seiten 70-74, XP000476557 in der Anmeldung erwähnt

## Beschreibung

Die Erfindung betrifft ein Verfahren zum Sichern wenigstens eines durch eine vorbestimmte Hierarchie von kryptografischen Schlüsseln geschützten Systems, insbesondere eines Pay-TV-Systems, gegen unberechtigte Nutzer gemäß Anspruch 1.

Auf vielen Einsatzgebieten wird eine Schlüsselhierarchie verwendet, um aus den individuellen kryptografischen Schlüsseln der Kunden einen für eine große Anzahl von Kunden gemeinsamen Schlüssel abzuleiten. Ein typischer Anwendungsfall stellt ein Pay-TV-System dar. Mit Hilfe einer Schlüsselhierarchie ist es möglich, die Erlaubnis zum Empfang eines Pay-TV-Programms selektiv nur an ausgewählte Kunden zu verteilen. Eine mögliche Schlüsselhierarchie weist die Form einer Baumstruktur auf. In der untersten Hierarchieebene erhält jeder potentielle Kunde zunächst eine Chipkarte oder ein anderes Sicherheitsmodul, auf der ein individueller, eindeutig dem Kunden zugeordneter Schlüssel gespeichert ist. Der Pay-TV-Programmanbieter speichert alle diese individuellen kryptografischen Schlüssel in einer zentralen Speichereinrichtung. Stufenweise wird danach die Schlüsselhierarchie aufgebaut, indem in der zweiten Ebene zunächst die Schlüssel der untersten Ebene zu mehreren Teilmengen vorbestimmter Größe zusammengefaßt werden. Jeder Teilmenge wird ein kryptografischer Gruppenschlüssel zugeordnet, der mit Hilfe der die kryptografischen Schlüssel der untersten Ebene, die die jeweilige Teilmenge bilden, übermittelt wird. Anschließend werden in der dritten Ebene die Teilmengen der zweiten Ebene zu mehreren Teilmengen zusammengefaßt, wobei jede Teilmenge der dritten Ebene größer ist als jede Teilmenge der zweiten Ebene. Jeder Teilmenge der dritten Ebene wird ein kryptografischer Gruppenschlüssel zugeordnet, der mit Hilfe der kryptografischen Gruppenschlüssel der zweiten Ebene, die die jeweilige Teilmenge bilden, übermittelt wird. Dieses Verfahren kann solange fortgesetzt werden, bis ein gemeinsamer Schlüssel für die Kunden, die zum Empfang des Pay-TV-Programms berechtigt sind, generiert ist. Auf ein solches, durch eine Schlüsselhierarchie geschütztes System sind verschiedene Angriffe denkbar, die alle davon ausgehen, daß ein unzuverlässiger Kunde den individuellen Schlüssel, einen oder mehrere Gruppenschlüssel oder den gemeinsamen Schlüssel, die auf seiner oder einer anderen Chipkarte gespeichert sind, kennt und diese unberechtigterweise an beliebige Dritte weitergibt. Man unterscheidet drei mögliche Angriffe auf ein solches System:
1. Der unzuverlässige Kunde kopiert den gemeinsamen Schlüssel und gibt diesen unberechtigterweise, z.B. auf einer Piratenchipkarte, an andere Personen weiter. Dieser Angriff kann dadurch abgewehrt werden, daß der Systembetreiber, der die kryptografischen Schlüssel generiert, den gemeinsamen Schlüssel in entsprechend kurz gewählten Zeitintervallen neu generiert.
2. Ein unzuverlässiger Kunde kopiert seinen individuellen kryptografischen Schlüssel und gibt diesen unberechtigterweise an andere Personen weiter. In diesem Fall kann der Kunde relativ einfach von der Nutzung des Systems ausgeschlossen werden, wenn der kopierte individuelle Schlüssel, z.B. auf einer Piratenkarte, erkannt wird. Denn zwischen dem individuellen kryptografischen Schlüssel und der dazugehörigen Person besteht ein eindeutiger Zusammenhang.
3. Ein unzuverlässiger Kunde kopiert einen Gruppenschlüssel und gibt diesen weiter. In diesem Fall ist es ohne weiteres nicht möglich, den unzuverlässigen Kunden eindeutig anhand des kopierten Gruppenschlüssels zu identifizieren. Der Systembetreiber muß entweder alle Kunden der durch den Gruppenschlüssel identifizierten Gruppe von der Benutzung des Systems ausschließen oder den Mißbrauch durch den kopierten Gruppenschlüssel tolerieren.

Der Erfindung liegt daher die Aufgabe zugrunde, ein Verfahren bereitzustellen, mit dem ein durch eine Schlüsselhierarchie geschütztes System gegen unberechtigte Nutzer effektiver geschützt werden kann.

Dieses technische Problem löst die Erfindung mit den Verfahrensschritten des Anspruchs 1.

Jedem potentiellen Systemnutzer wird in der untersten Ebene der Schlüsselhierarchie ein individueller kryptografischer Schlüssel zugeordnet, der ihm beispielsweise durch eine Chipkarte oder ein anderes Sicherheitsmodul ausgehändigt werden kann. Die individuellen kryptografischen Schlüssel jedes Nutzers werden in einer dem System zugeordneten Speichereinrichtung abgespeichert. Zu vorbestimmten diskreten Zeitpunkten wird anschließend wenigstens eine höhere Hierarchieebene von kryptografischen Schlüsseln aus der untersten Hierarchieebene durch folgende Schritte gebildet: die kryptografischen Schlüssel der unmittelbar niedrigeren Hierarchieebene werden in beliebiger Weise zu mehreren Teilmengen vorbestimmter Größe zusammengefaßt, wobei jeder Teilmenge ein kryptografischer Schlüssel zugeordnet wird, der mit Hilfe der die jeweilige Teilmenge bildenden kryptografischen Schlüssel übermittelt und anschließend in der Speichereinrichtung abgelegt wird. Danach wird wenigstens ein, einem verdächtigen Nutzer zugeordneter individueller kryptografischer Schlüssel ermittelt, indem die Schnittmenge von wenigstens zwei vorbestimmten, zu verschiedenen Zeitpunkten gebildeten Teilmengen, die der gleichen Hierarchieebene angehören und erforderlich sind, gebildet wird.

Vorteilhafte Weiterbildungen sind in den Unteransprüchen angegeben.

Statt zu vorbestimmten diskreten Zeitpunkten die höheren Hierarchieebenen neu zu bilden, können für unterschiedliche Systembetreiber gleichzeitig verschiedene Schlüsselhierarchien erzeugt werden, wobei ein zu findender Nutzer in mehreren der gleichzeitig existierenden Schlüsselhierarchien vorhanden ist. Jede Schlüsselhierarchie weist wenigstens eine höhere Hierarchieebene von kryptografischen Schlüsseln auf. Eine höhere Hierarchieebene wird dadurch gebildet, daß die kryptografischen Schlüssel der unmittelbar niedrigeren Hierarchieebene in beliebiger Weise zu mehreren Teilmengen vorbestimmter Größe zusammengefaßt werden, wobei jeder Teilmenge ein kryptografischer Schlüssel zugeordnet wird, der aus den, die jeweilige Teilmenge bildenden kryptografischen Schlüssel generiert und anschließend in der Speichereinrichtung abgelegt wird. Danach wird wenigstens ein, einem verdächtigen Nutzer zugeordneter individueller kryptografischer Schlüssel ermittelt, indem die Schnittmenge von wenigstens zwei vorbestimmten Teilmengen, die der gleichen Hierarchieebene verschiedener, gleichzeitig existierender Schlüsselhierarchien angehören, gebildet wird.

Man kann zur Realisierung dieses Verfahrens sukzessive immer größere Teilmengen entsprechend der Anzahl von Hierarchieebenen bilden. Ein mögliches Beispiel hierfür wäre eine Schlüsselhierarchie in Baumstruktur. Eine besonders effiziente Lösung ergibt sich jedoch, wenn man geometrische Strukturen verwendet, um die kryptografischen Schlüssel zu Teilmengen vorbestimmter Größe zusammenzufassen. Geometrische Strukturen bieten den Vorteil, daß die Eigenschaften der Schnittmengenbildung verschiedener Teilmengen sehr gut beschrieben werden können.

Vorzugsweise kann eine für mehrere Kunden erzeugte Schlüsselhierarchie mit Hilfe eines endlichen affinen Raums AG(d, q) der Dimension d über dem Körper GF(q) realisiert werden (siehe A. Beutelspacher, Einführung in die endliche Geometrie I & II, BI Wissenschaftsverlag 1982, und A. Beutelspacher und U. Rosenbaum, Projektive Geometrie, Vieweg Verlag, 1992).

Die Schnittmengenbildung wird noch einfacher, wenn die geometrische Struktur ein endlicher projektiver Raum PG(d, q) der Dimension d über dem Körper GF(q) ist.

Die Erfindung wird nachfolgend anhand mehrerer Ausführungsbeispiel in Verbindung mit den beiliegenden Zeichnungen näher erläutert. Es zeigen:
- Fig. 1: eine Schlüsselhierarchie für vier berechtigte Teilnehmer in Baumstruktur, die zu einem ersten Zeitpunkt gebildet worden ist,
- Fig. 2: eine Schlüsselhierarchie nach Fig. 1, die jedoch zu einem zweiten Zeitpunkt generiert worden ist,
- Fig. 3: eine Schlüsselhierarchie für 27 Teilnehmer des affinen Raums AG(3,3), die zu einem ersten Zeitpunkt gebildet worden ist,
- Fig. 4: eine Schlüsselhierarchie nach Fig. 3, die zu einem zweiten Zeitpunkt erzeugt worden ist, und
- Fig. 5: zwei verschiedene, zur gleichen Zeit existierende Schlüsselhierarchien.

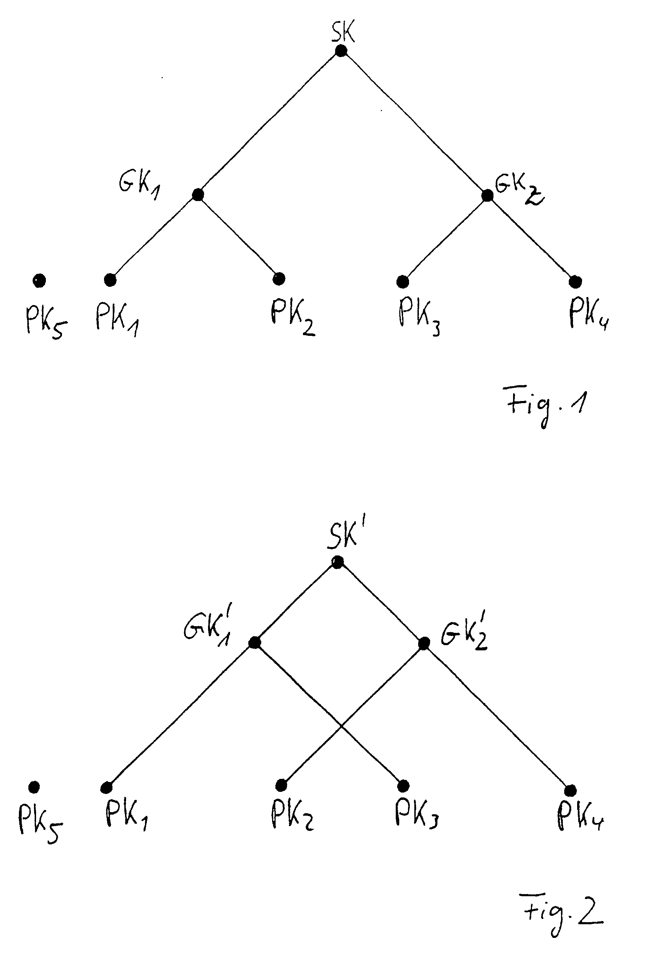

In Fig. 1 ist eine Schlüsselhierarchie in Baumstruktur beispielsweise für ein Pay-TV-System dargestellt, das beispielsweise fünf Kunden umfaßt. Jeder Kunde i erhält von einem Sytembetreiber oder Pay-TV-Programmanbieter einen individuellen kryptografischen Schlüssel PK_{i,} der in der untersten Hierarchieebene angeordnet wird. Die unterste Hierarchieebene enthält somit fünf individuelle kryptografische Schlüssel PK₁-PK₅. Der Anbieter speichert diese Schlüssel in einer zentralen Speichereinrichtung. Mit Hilfe der verwendeten Baumstruktur ist es nunmehr möglich, ausgewählten Kunden die Erlaubnis zum Empfang eines Pay-TV-Programms einzuräumen. Beispielsweise sollen nur die Kunden 1, 2, 3, und 4 zum Empfang des TV-Programms autorisiert werden, der Kunde 5 dagegen nicht. Um diese Berechtigungszuweisung zu erreichen, werden die Kunden 1 bis 4 in der nächsthöheren Hierarchieebene - das ist die zweite Ebene - vorteilhafterweise zu zwei Teilmengen mit jeweils zwei Kunden zusammengefaßt. In der Praxis geschieht dies dadurch, daß in einer zentralen Stelle zunächst für die beiden Teilmengen jeweils ein Gruppenschlüssel GK₁ bzw. GK₂ generiert wird. Der Gruppenschlüssel GK₁ wird mit Hilfe der beiden individuellen kryptografischen Schlüssel PK₁ und PK₂ der Kunden 1 bzw. 2 übertragen, wohingegen der Gruppenschlüssel GK₂ mit Hilfe der beiden individuellen kryptografischen Schlüsseln PK₃ und PK₄ der Kunden 3 bzw. 4 übertragen wird. Die Kunden 1 und 2 können mittels ihres individuellen kryptografischen Schlüssel PK₁ bzw. PK₂ den Gruppenschlüssel GK₁ berechnen, wohingegen die Kunden 3 und 4 mittels ihrer individuellen kryptografischen Schlüssel PK₃ bzw. PK₄ den Gruppenschlüssel GK₂ berechnen können. Der Kunde 5 hingegen kann keinen der beiden Gruppenschlüssel entschlüsseln. In der höchsten Hierarchieebene - das ist hier die dritte Ebene - wird danach eine Gesamtmenge gebildet, die die beiden Teilmengen der unmittelbar darunterliegenden Ebene 2 und damit die vier berechtigten Kunden enthält. In der zentralen Stelle wird dazu ein gemeinsamer Schlüssel SK mit Hilfe der beiden Gruppenschlüssel GK₁ und GK₂ der zweiten Ebene übertragen. Da das vom Anbieter ausgestrahlte Pay-TV-Programm mit dem gemeinsamen Schlüssel SK verschlüsselt ist, können die Kunden 1 bis 4 das Programm entschlüsseln und empfangen, der Kunde 5 hingegen nicht. Die in Fig. 1 dargestellte Schlüsselhierarchie umfaßt beispielhaft drei Hierarchieebenen.

Die Erfindung beschäftigt sich nunmehr mit dem Problem, einen unzuverlässigen Kunden ausfindig zu machen, der einen Gruppenschlüssel GK₁ oder GK₂ kopiert und unberechtigterweise an Dritte weitervertreiben hat. Der unzuverlässige Kunde kann die "gestohlenen" Gruppenschlüssel in Form von Piraten-Chipkarten veräußern oder auch unter einer e-Mail-Adresse anbieten. Es sei angenommen, daß es sich bei dem Kunden 4 um den unzuverlässigen Kunden, nachfolgend auch Pirat genannt, handelt, der den Gruppenschlüssel GK_{2,}, der von der zentralen Stelle zuvor rundgesendet worden ist, kopiert und nun an beliebige Dritte weiterveräußert hat. Wenn der Systembetreiber in den Besitz des kopierten Gruppenschlüssels GK₂ kommt, kann er den Piraten nicht eindeutig ermitteln, da der Gruppenschlüssel GK₂ den beiden Kunden 3 und 4 zugeordnet ist. Es ist nun Ziel der Erfindung, den unzuverlässigen Kunden 4 aus der Gruppe von Kunden herauszufinden, die durch den Gruppenschlüssel GK₂ identifiziert sind. Dazu wird die verdächtige Gruppe mit ihrem zugeordneten kryptografischen Schlüssel GK₂ in der zentralen Stelle abgespeichert. Zu einem vorbestimmten Zeitpunkt generiert die zentrale Stelle eine neue Schlüsselhierarchie, die in Fig. 2 dargestellt ist. gebildet. Dazu werden willkürlich zwei neue Teilmengen gebildet, die beispielsweise die Kunden 1, 3 bzw. 2 und 4 umfassen. Die Neubildung der Teilmengen wird in der zentralen Stelle verwirklicht, indem für jede Teilmenge ein neuer Gruppenschlüssel GK₁' bzw. GK₂' generiert wird. Darüber hinaus wird auch ein neuer gemeinsamer Schlüssel SK' erzeugt. Die Vorgehensweise zur Erzeugung von Gruppenschlüssel und eines gemeinsamen Schlüssels wurde bereits oben ausführlich erläutert. Die neu generierten kryptografischen Schlüssel werden wiederum zu den einzelnen Kunden ausgesendet und in der zentralen Stelle abgespeichert. Der Pirat, in unserem Fall der Kunde 4, ist nunmehr gezwungen, den neuen Gruppenschlüssel GK₂' zu kopieren und an beliebige Personen zu verteilen. Sobald die zentrale Stelle im Besitz des kopierten Gruppenschlüssels GK₂' ist, wird dieser in der zentralen Speichereinrichtung abgespeichert. Anschließend wird die Schnittmenge aus der Teilmenge, der der kryptografische Gruppenschlüssel GK₂ zugeordnet ist, und der Teilmenge, der der kryptografische Gruppenschlüssel GK₂' zugeordnet ist, ermittelt. Da die zum ersten Zeitpunkt (s. Fig. 1) gebildete Teilmenge die Kunden 3 und 4 und die zum zweiten Zeitpunkt (s. Fig. 2) gebildete Teilmenge die Kunden 2 und 4 enthält, ergibt sich als Schnittmenge der Kunde 4. Die zentrale Stelle kennt nun den unzuverlässigen Kunden und kann ihn von der Nutzung des Systems ausschließen, indem beispielsweise sein individueller kryptografischer Schlüssel PK₄ gesperrt wird. Obwohl die in Fig. 1 und 2 gezeigten Schlüsselhierarchien nur vier Kunden erfassen, können Schlüsselhierarchien beliebiger Größe verwendet werden. Damit erhöht sich selbstverständlich auch der Aufwand, einen unzuverlässigen Kunden zu finden, da die Anzahl der Gruppen größer ist.
In Fig. 3 und 4 sind zwei zu unterschiedlichen Zeitpunkten gebildete Hierarchien von Teilmengen beschrieben, die mit Hilfe des endlichen affinen Raums AG(3,3) der Dimension 3 über den Körper GF(3) realisiert werden können. Der in Fig. 3 und 4 dargestellte affine Raum besteht aus 27 Punkten, die den potentiellen Pay-TV-Kunden entsprechen. Es ist vorteilhaft, die Hierarchie von Teilmengen mit Hilfe des endlichen affinen Raums zu realisieren, da damit die Eigenschaften der Schnittmengenbildung verschiedener Teilmengen sehr genau beschrieben werden kann. Fig. 3 zeigt die zu einem ersten Zeitpunkt gebildete Hierarchie. Jedem Kunden wird wieder ein individueller kryptografischer Schlüssel PK₁ bis PK₂₇ bereitgestellt. Man kann sich nun vorstellen, daß jedem Punkt des affinen Raums ein kryptografischer Schlüssel des jeweiligen Kunden zugeordnet ist. Die 27 Punkte können sukzessive zu Teilmengen von drei bzw. neun Punkten zusammengefaßt werden, indem man zunächst neun parallele Geraden auswählt und danach drei parallele Ebenen, die mit den Geraden verträglich sein müssen. Mit anderen Worten müssen die Geraden jeweils vollständig in einer der drei Ebenen enthalten sein. Übertragt man diese Struktur auf eine Schlüsselhierarchie, liegen die einzelnen Punkte in der untersten Ebene, die Geraden in der zweiten Ebene, die drei Ebenen des affinen Raumes in der dritten Ebene, wobei die höchste Hierarchieebene den gesamten, die einzelnen Punkte, die neun Geraden und drei Ebenen umfassenden Raum enthält. In der zentralen Stelle werden nach dem bereits ausführlich beschriebenen verfahren für jede Gerade, für jede Ebene des affinen Raums Gruppenschlüssel und für den Raum selbst ein gemeinsamer, alle Kunden umfassender Schlüssel generiert. Der Vorteil der geometrischen Strukturen und insbesondere von affinen Räumen besteht nun darin, daß man genau angeben kann, wieviele Teilmengen (Geraden oder Ebenen) man kennen muß, um einen bestimmten Punkt zu ermitteln. So schneiden sich beispielsweise zwei nichtparallele Ebenen eines affinen Raums genau in einer Geraden, und drei paarweise nichtparallele Ebenen in genau einem Punkt. Um beispielsweise den individuellen Schlüssel eines Piraten zu ermitteln, der den Gruppenschlüssel einer Ebene (das entspricht einer Gruppe von neun Personen) des affinen kopiert und weiterveräußert hat, genügt es, den affinen Raum zu drei diskreten Zeitpunkten derart in neue Ebenen aufzuteilen, daß die Ebenen nicht parallel zueinander verlaufen. Mit anderen Worten, möchte man einen unzuverlässigen Kunden aus den 27 Kunden ermitteln, muß neben den in Fig. 3 und 4 zu unterschiedlichen Zeitpunkten gebildeten Hierarchien noch eine dritte, zu einem dritten Zeitpunkt gebildete Hierarchie erzeugt werden. Werden die drei paarweise nicht parallelen Ebenen, denen jeweils ein bestimmter Gruppenschlüssel zugeordnet ist, miteinander geschnitten, so erhält man einen gemeinsamen Schnittpunkt, der dem unzuverlässigen Kunden entspricht. Die zentrale Stelle muß nur noch veranlassen, daß der zu dem unzuverlässigen Kunden gehörende individuelle kryptografische Schlüssel gesperrt wird.

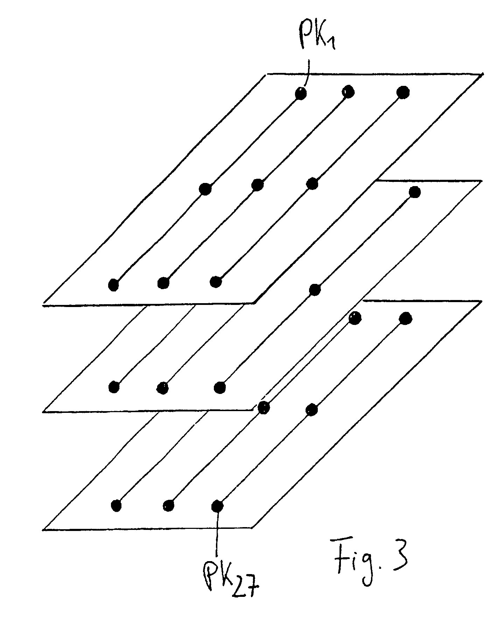

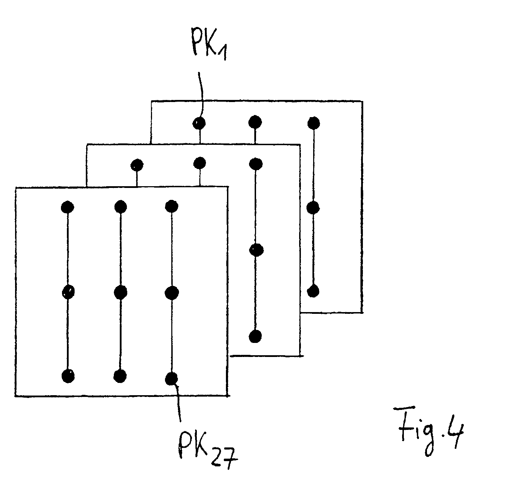

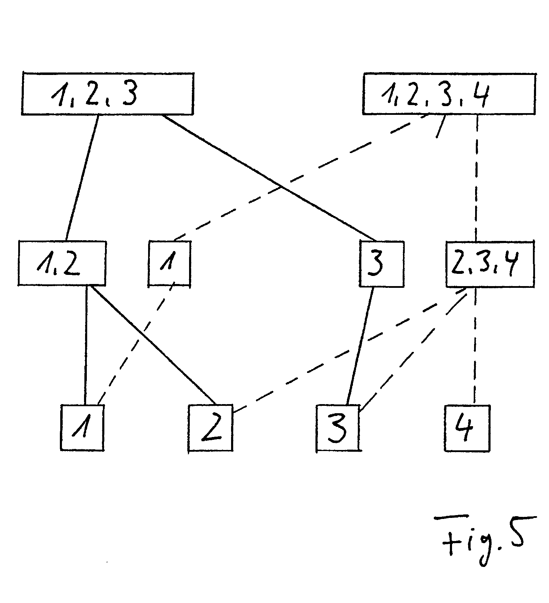

Noch einfacher wird das Verfahren zur Ermittlung eines unzuverlässigen Kunden durch Schnittmengenbildung, wenn endliche projektive Räume anstelle von endlichen affinen Räumen verwendet werden, da man hier nicht zwischen parallelen und nichtparallelen Strukturen unterscheiden muß. Die oben beschriebenen Verfahren können auch angewendet werden, wenn ein unzuverlässiger Kunde mehrere individuelle Schlüssel kopiert und diese abwechselnd einsetzt. In diesem Fall müssen aber deutlich mehr Hierarchien zu unterschiedlichen Zeitpunkten gebildet werden. Kennt z.B. ein Pirat zwei von neun individuellen kryptografischen Schlüsseln, so muß die affine Ebene insgesamt dreimal neu in parallele Geraden aufgeteilt werden, um eine fälschl he Identifizierung eines berechtigten Teilnehmers auszuschließen und einen der beiden Schlüssel zu identifizieren.
Anstatt zur Ermittlung des individuellen Schlüssels eines Piraten mehrere Schlüsselhierarchien zu vorbestimmten Zeitpunkten zu bilden müssen, ist es auch vorstellbar, daß verschiedene Schlüsselhierarchien zur gleichen Zeit existieren. In Fig. 5 sind zwei verschiedene Schlüsselhierarchien dargestellt. Mehrere gleichzeitig existierende Schlüsselhierarchien sind sinnvoll, wenn sich mehrere Diensteanbieter eine Kundenchipkarte teilen. Es sei angenommen, daß der Kunde 2 den die beiden Kunden 1 und 2 enthaltenden Gruppenschlüssel 10 des einen Diensteanbieters und den die Kunden 2, 3 und 4 enthaltenden Gruppenschlüssel 20 des anderen Diensteanbieters kopiert und weiterveräußert habe. In diesem Fall kann man den unzuverlässigen Kunden wiederum durch Bildung der Schnittmengen der zugehörigen Gruppen 10 und 20 bestimmen. Wie unter anderem aus Fig. 5 zu erkennen ist, müssen die Teilmengen derselben Hierarchieebene nicht notwendigerweise die gleiche Größe aufweisen.

## Patentansprüche

1. Verfahren zum Sichern wenigstens eines durch eine vorbestimmte Hierarchie von kryptografischen Schlüsseln geschützten Systems, insbesondere eines Pay-TV-Systems, gegen unberechtigte Nutzer mit folgenden Verfahrensschritte:
a) jedem Systemnutzer wird in der untersten Hierarchieebene ein individueller kryptografischer Schlüssel zugeordnet;
b) die individuellen, kryptografischen Schlüssel werden in einer dem System zugeordneten Speichereinrichtung abgespeichert;
c) zu vorbestimmten diskreten Zeitpunkten wird jeweils wenigstens eine höhere neue Hierarchieebene von kryptografischen Schlüsseln **aus der untersten Hierarchiesbene** durch folgende Schritte gebildet:
die kryptografischen Schlüssel der unmittelbar niedrigeren Hierarchieebene werden in beliebiger Weise zu mehreren Teilmengen vorbestimmter Größe zusammengefaßt, wobei jeder Teilmenge ein kryptografischer Schlüssel zugeordnet wird, der mit Hilfe der die jeweilige Teilmenge bildenden kryptografischen Schlüssel übertragen und anschließend in der Speichereinrichtung abgelegt wird;
d) mengentheoretische Schnittmengenbildung von wenigstens zwei vorbestimmten, zu verschiedenen Zeitpunkten gebildeten unterschiedlichen Teilmengen, die der gleichen Hierarchieebene angehören und erforderlich sind, wenigstens einen, einem Nutzer zugeordneten individuellen kryptografischen Schlüssel zu ermitteln.

2. Verfahren nach Anspruch 1, **dadurch gekennzeichnet, daß** zum Sichern mehrerer Systeme eine entsprechende Anzahl gleichzeitig existierender Hierarchien von kryptografischen Schlüsseln verwendet wird, wobei ein zu findender unzuverlässiger Nutzer in mehreren der gleichzeitig existierenden Schlüsselhierarchien vorhanden ist und dass
die Schritte c) und d) ersetzt werden durch die Schritte:
c') für jedes System werden gleichzeitig wenigstens zwei höhere Hierarchieebene von kryptografischen Schlüsseln durch folgende Schritte gebildet:
- die kryptografischen Schlüssel der unmittelbar niedrigeren Hierarchieebene werden in beliebiger Weise zu mehreren Teilmengen vorbestimmter Größe zusammengefaßt, wobei jeder Teilmenge ein kryptografischer Schlüssel zugeordnet wird, der mit Hilfe der die jeweilige Teilmenge bildenden kryptografischen Schlüssel übertragen und anschließend in der Speichereinrichtung abgelegt wird, wobei die Teilmengen gleicher Hierarchieebenen und verschiedener Schlüsselhierarchien unterschiedlich sind;
d') mengentheoretische Schnittmengenbildung von wenigstens zwei vorbestimmten Teilmengen, die der gleichen Hierarchieebene verschiedener, gleichzeitig existierender Schlüsselhierarchien angehören und erforderlich sind,
wenigstens einen, einem Nutzer zugeordneten individuellen kryptografischen Schlüssels zu ermitteln.

3. Verfahren nach Anspruch 1 oder 2,
**dadurch gekennzeichnet, daß** das Zusammenfassen der kryptografischen Schlüssel zu Teilmengen vorbestimmter Größe durch endliche geometrische Strukturen festgelegt wird.

4. Verfahren nach Anspruch 3,
**dadurch gekennzeichnet, daß** die geometrische Struktur ein endlicher affiner Raum AG(d,q) der Dimension d über dem Körper GF(q) ist.

5. Verfahren zur Ermittlung eines kryptografischen Schlüssels nach Anspruch 3,
**dadurch gekennzeichnet, daß** die geometrische Struktur ein endlicher projektiver Raum PG(d,q) der Dimension d über dem Körper GF(q) ist.

## Claims

1. Process for securing at least one system protected by a predetermined hierarchy of cryptographic keys, particularly a pay TV system, against unauthorized users with the following process steps:
a) each system user is associated in the lowest hierarchy level with a personal cryptographic key;
b) the personal, cryptographic keys are stored in a storage means associated with the system;
c) at predetermined discrete times, at least one higher new hierarchy level of cryptographic keys is formed from the lowest hierarchy level by the following steps:
the cryptographic keys of the immediately lower hierarchy level are combined in any manner to form a plurality of subsets of predetermined size, each subset being associated with a cryptographic key, said cryptographic key being transmitted using the cryptographic keys forming the respective subset and then being stored in the storage means;
d) set-theoretical formation of intersection sets of at least two predetermined different subsets formed at different times, said different subsets belonging to the same hierarchy level and being required in order to determine at least one personal cryptographic key associated with a user.

2. Process according to claim 1, **characterized in that**, in order to secure a plurality of systems, use is made of a corresponding number of simultaneously existing hierarchies of cryptographic keys, wherein an unreliable user who is to be found is present in more than one of the simultaneously existing hierarchies of keys, and **in that**
steps c) and d) are replaced by the steps:
c') for each system, at least two higher hierarchy levels of cryptographic keys are simultaneously formed by the following steps:
- the cryptographic keys of the immediately lower hierarchy level are combined in any manner to form a plurality of subsets of predetermined size, each subset being associated with a cryptographic key, said cryptographic key being transmitted using the cryptographic keys forming the respective subset and then being stored in the storage means, the subsets of identical hierarchy levels and different key hierarchies being different;
d') set-theoretical formation of intersection sets of at least two predetermined subsets, said subsets belonging to the same hierarchy level of different, simultaneously existing key hierarchies and being required in order to determine at least one personal cryptographic key associated with a user.

3. Process according to claim 1 or 2,
**characterized in that** the combining of the cryptographic keys to form subsets of predetermined size is determined by finite geometrical structures.

4. Process according to claim 3,
**characterized in that** the geometrical structure is a finite affine space AG(d,q) of dimension d over body GF(q).

5. Process for determining a cryptographic key according to claim 3,
**characterized in that** the geometrical structure is a finite projective space PG(d,q) of dimension d over body GF(q).

## Revendications

1. Procédé pour sécuriser au moins un système protégé par une hiérarchie prédéterminée de clés cryptographiques, en particulier un système de télévision à péage, contre des utilisateurs non autorisés, comportant les étapes suivantes :
a) une clé cryptographique personnelle est attribuée à chaque utilisateur du système au niveau hiérarchique le plus bas ;
b) les clés cryptographiques personnelles sont enregistrées dans un dispositif de mémorisation alloué au système ;
c) à des moments discrets déterminés à l'avance, au moins un nouveau niveau hiérarchique supérieur de clés cryptographiques est créé à partir du niveau **hiérarchique le plus bas** à l'aide des étapes suivantes :
les clés cryptographiques du niveau hiérarchique immédiatement inférieur sont regroupées de façon arbitraire en plusieurs sous-ensembles d'une taille prédéfinie, une clé cryptographique qui est transmise à l'aide des clés cryptographiques formant le sous-ensemble concerné puis enregistrée dans le dispositif de mémorisation étant affectée à chaque sous-ensemble ;
d) formation d'une intersection, en rapport avec la théorie des ensembles, d'au moins deux sous-ensembles différents prédéterminés formés à différents moments qui font partie du même niveau hiérarchique et sont nécessaires pour déterminer au moins une clé cryptographique personnelle attribuée à un utilisateur.

2. Procédé selon revendication 1, **caractérisé en ce que**, pour sécuriser plusieurs systèmes, on utilise un nombre correspondant de hiérarchies, co-existantes, de clés cryptographiques, un utilisateur non fiable à trouver étant présent en même temps dans plusieurs hiérarchies de clés co-existantes et **en ce que**
les étapes c) et d) sont remplacées par les étapes :
c') au moins deux niveaux hiérarchiques supérieurs de clés cryptographiques sont créés en même temps pour chaque système à l'aide des étapes suivantes :
- les clés cryptographiques du niveau hiérarchique immédiatement inférieur sont regroupées de façon arbitraire en plusieurs sous-ensembles de taille prédéterminée, une clé cryptographique qui est transmise à l'aide des clés cryptographiques formant le sous-ensemble concerné puis enregistrée dans le dispositif de mémorisation étant attribuée à chaque sous-ensemble, les sous-ensembles de mêmes niveaux hiérarchiques et de différentes hiérarchies de clés étant différents ;
d') formation, en rapport à la théorie des ensembles, d'intersections d'aux moins deux sous-sembles prédéterminés qui font partie au même niveau hiérarchique de différentes hiérarchies de clés co-existantes et sont nécessaires pour déterminer au moins une clé cryptographique personnelle attribuée à un utilisateur.

3. Procédé selon revendication 1 ou 2,
**caractérisé en ce que** le groupement des clés cryptographiques en sous-ensembles de taille prédéterminée est défini par des structures géométriques finies.

4. Procédé selon revendication 3,
**caractérisé en ce que** la structure géométrique est un espace affine fini AG (d, q) de la dimension d au-dessus du solide GF (q).

5. Procédé pour la détermination d'une clé cryptographique selon revendication 3,
**caractérisé en ce que** la structure géométrique est un espace projectif fini PG (d, q) de dimension d au-dessus du corps GF (q).
